# EUROPÄISCHE PATENTANMELDUNG

(11) **EP 1 566 654 A2**
(43) Veröffentlichungstag der Anmeldung: **24.08.2005**
(21) Anmeldenummer: 05000965.3
(22) Anmeldetag: 19.01.2005
(51) Int. Cl.: G01S 3/783, B60R 27/00

(54) **Vorrichtung für ein Kraftfahrzeug zum Messen von Licht**

(30) Priorität: 24.01.2004 DE 102004003686
(71) Anmelder: Hella KGaA Hueck & Co., 59552 Lippstadt (DE)
(72) Erfinder: Schulte, Michael, 33106 Paderborn (DE); Wirries, Eckart, 59556 Lippstadt (DE)

(57) **Zusammenfassung**

Die vorliegende Erfindung betrifft eine Vorrichtung für ein Kraftfahrzeug zum Messen von Licht mit mehreren Sensorelementen (1, 2, 3, 4), wobei ein Sensorelement (1) zum Messen des Lichts in der Fahrtrichtung des Kraftfahrzeugs und ein Sensorelement (2) zum Messen des Lichts in der Umgebung des Kraftfahrzeugs geeignet ist und wobei ein oder zwei Sensorelemente (3, 4) zum Ermitteln des Flächenwinkels einer Lichtquelle und ein Sensorelement (2) zum Ermitteln des Höhenwinkels der Lichtquelle geeignet ist.

## Beschreibung

Die Erfindung betrifft eine Vorrichtung für ein Kraftfahrzeug zum Messen von Licht mit mehreren Sensorelementen, wobei ein Sensorelement zum Messen des Lichts in der Fahrtrichtung des Kraftfahrzeugs und ein Sensorelement zum Messen des Lichts in der Umgebung des Kraftfahrzeugs geeignet ist.

### STAND DER TECHNIK

Ein derartiger Sensor ist aus der Patentschrift DE 196 30 216 C2 bekannt. Diese Druckschrift offenbart eine fahrsituationsabhängige Lichtsteuerung. Mit der fahrsituationsabhängigen Lichtsteuerung, die oftmals unter dem Begriff "Regen-Licht-Sensor" bekannt ist, kann die Beleuchtungsanlage eines Kraftfahrzeugs so gesteuert werden, dass es ab einem gewissen Grad der Dunkelheit das Fahrlicht des Kraftfahrzeugs eingeschaltet wird. Eine manuelle Betätigung des Lichtschalters für das Fahrlicht durch den Fahrer des Kraftfahrzeugs ist damit nicht mehr notwendig.

Ferner ist aus der Druckschrift mit der Veröffentlichungsnummer DE 689 10 025 T2 eine Vorrichtung für ein Kraftfahrzeug zum Messen von Licht bekannt, mit welcher der Flächenwinkel und der Höhenwinkel der Sonne gemessen werden kann. Je nach Größe des Flächenwinkels bzw. Höhenwinkels der Sonne wird dann die Klimaanlage des Kraftfahrzeugs eingestellt. Um den Flächenwinkel und den Höhenwinkel messen zu können, weist die Vorrichtung ebenfalls mehrere Sensorelemente auf. Eine Vorrichtung zur Messung des Flächen- bzw. Höhenwinkels der Sonne relativ zu einem Kraftfahrzeug ist heute üblicherweise auf der Oberseite des Instrumententräger bzw. des Armaturenbretts. Dieser Einbauort der Vorrichtung ist aus Design-, Montage- und Verkabelungsgründen nicht optimal. Außerdem ist nicht optimal, dass sowohl für den sogenannten Regen-Licht-Sensor als auch für den sogenannten Sonnensensor eine Vielzahl von Sensorelementen benötigt wird.

Der Erfindung liegt daher die Aufgabe zugrunde, eine Vorrichtung der eingangs genannten Art sofort zu bilden, dass mit ihr sowohl die Funktionen eines Regen-Licht-Sensors als auch die Funktionen eines Sonnensensors erfüllt werden können.

### VORTEILE DER ERFINDUNG

Diese Aufgabe wird erfindungsgemäß dadurch gelöst, dass die Vorrichtung für ein Kraftfahrzeug zum Messen von Licht mit mehreren Sensorelementen ein oder zwei Sensorelemente zum Ermitteln des Flächenwinkels einer Lichtquelle und ein Sensorelement zum Ermitteln des Höhenwinkels der Lichtquelle aufweist.

Mit der erfindungsgemäßen Vorrichtung ist es daher möglich, sowohl die Funktionen des Regen-Licht-Sensors als auch die Funktionen des Sonnen-Licht-Sensors zu übernehmen.

Bei einer erfindungsgemäßen Vorrichtung kann eines der Sensorelemente sowohl zum Messen des Lichts in der Umgebung als auch zum Ermitteln des Höhenwinkels der Lichtquelle geeignet sein. Ebenso ist es möglich, dass eines der Sensorelemente sowohl zum Messen des Lichtes in der Umgebung als auch zum Messen des Flächenwinkels geeignet ist. Ebenso ist es denkbar, dass eines der Sensorelemente sowohl zum Messen des Lichts in der Fahrtrichtung als auch zum Ermitteln des Höhenwinkels oder des Flächenwinkels geeignet ist. Bei diesen weiteren Ausführungen einer erfindungsgemäßen Vorrichtung übernehmen einzelne Sensorelemente sowohl Messungen, wie sie üblicherweise bei einem Regen-Licht-Sensor vorgesehen sind, als auch Messungen, wie üblicherweise bei einem Sonnensensor vorgesehen sind.

Gemäß der Erfindung kann die Vorrichtung ein Mittel zum Umschalten des Messbereichs desjenigen Sensorelements aufweisen, dass für die Messung bzw. Ermittlung verschiedener Größen geeignet ist. Während beispielsweise das Sensorelement für die Messung des Lichts in der Umgebung eine Lichtempfindlichkeit von lediglich bis zu 100 Lux Lichtstärke aufweisen muss, ist es für die Messung des Höhenwinkels der Lichtquelle notwendig, dass das gleiche Sensorelement einen Messbereich von bis zu 100.000 Lux Lichtstärke abdeckt.

Die Sensorelemente einer erfindungsgemäßen Vorrichtung können zumindest teilweise Fotodioden sein.

Jedem der Sensorelemente kann erfindungsgemäß eine optisches Element zugeordnet sein, welches Teil der Vorrichtung ist.

Gemäß der Erfindung kann das optische Element, welches dem Sensorelement zugeordnet ist, das sowohl zum Messen des Lichts in der Umgebung als auch zum Ermitteln des Höhenwinkels vorgesehen ist, ein optisches Element aufweisen.

Eine erfindungsgemäße Vorrichtung kann in einem Kraftfahrzeug eingesetzt sein. Gemäß der Erfindung kann dabei die Vorrichtung im Bereich des oberen Endes in der Mitte einer Windschutzscheibe des Kraftfahrzeugs angebracht sein. Dieses entspricht einer Anbringung im Bereich des Innenspiegels bei einem Kraftfahrzeug.

### ZEICHNUNGEN

Die Erfindung ist anhand der Zeichnung näher erläutert. Darin zeigt
- Fig. 1: eine schematische Darstellung einer Anordnung von Sensorelementen auf einer Platine;
- Fig. 2: eine Schnittdarstellung eines Teils eines erfindungsgemäßen Sensors,
- Fig. 3 bis 5: perspektivische Darstellungen von Sensorelementen und den Sensorelementen zugeordneten optischen Elementen,
- Fig. 6: einen Schnitt durch ein Ausführungsbeispiel eines erfindungsgemäßen Sensors und
- Fig. 7: ein Blockschaltdiagramm eines erfindungsgemäßen Sensors.

### BESCHREIBUNG DER AUSFÜHRUNGSBEISPIELE

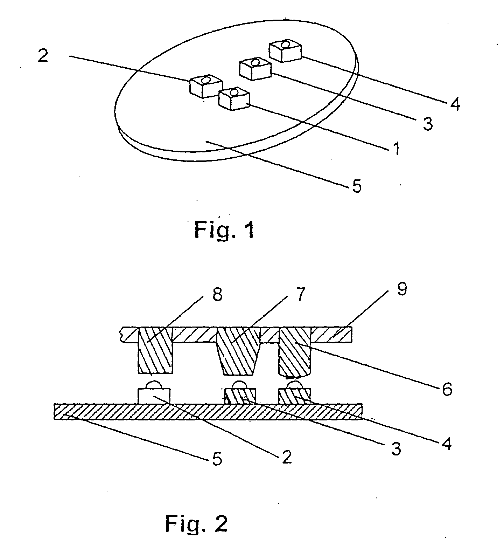

Bei einer erfindungsgemäßen Vorrichtung für ein Kraftfahrzeug zum Messen von Licht können vier Sensorelemente 1, 2, 3, 4 auf einer Platine 5 angeordnet sein, wie dies in Fig. 1 vereinfacht dargestellt ist. Zwei erste nebeneinanderliegende Sensorelemente 1, 2 sind als Sensorelemente 1, 2 zum Ermitteln des Flächenwinkels einer Lichtquelle, insbesondere der Sonne ausgestaltet. Ein zweites Sensorelement 3, welches in Reihe zu einem vierten Sensorelement 4 neben den beiden ersten Sensorelementen 1, 2 zum Ermitteln des Flächenwinkels einer Lichtquelle liegt, ist als Sensorelement 3 zum Messen des Lichts in der Umgebung des Kraftfahrzeugs und gleichzeitig zum Ermitteln des Höhenwinkels der Lichtquelle ausgestaltet. Das vierte Sensorelement 4 ist dagegen als Sensorelement zum Messen des Lichts in der Fahrtrichtung des Kraftfahrzeugs ausgestaltet.

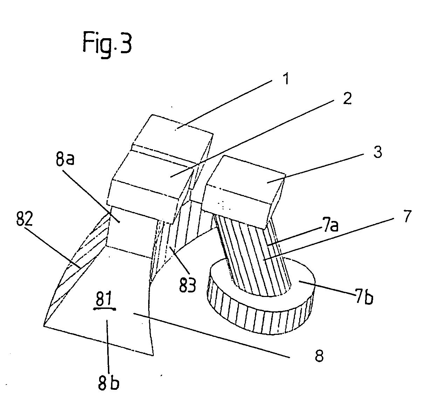

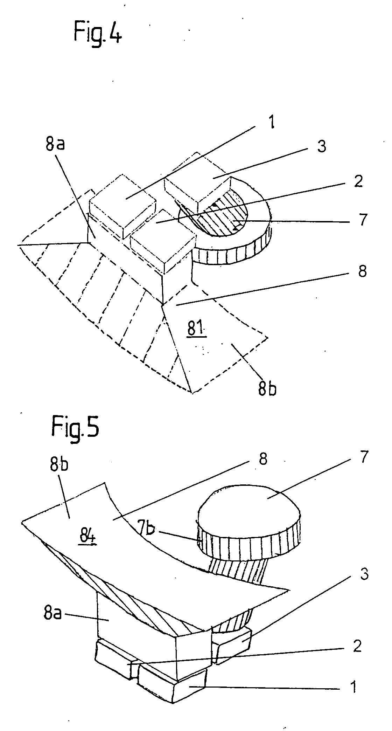

Die in Fig. 2 ausschnittsweise dargestellte Vorrichtung zum Messen von Licht weist die vorgenannten vier Sensorelemente 1, 2, 3, 4 auf, die ebenso wie die Sensorelemente der Vorrichtung gemäß Fig. 1 angeordnet sind. Im Folgenden werden gleiche Bezugszeichen für die in ihrer Funktion gleichen Sensorelemente verwendet. Die Verwendung der gleichen Bezugszeichen ist im übrigen nicht nur auf die Sensorelemente 1, 2, 3, 4 und die Fig. 1 und 2 beschränkt, sondern gilt gleichermaßen auch für andere Elemente und auch für die Ausführungsbeispiele gemäß der nachfolgenden Fig. 3 bis 7.

Gegenüber der Darstellung in Fig. 1 ist in Fig. 2 zusätzlich oberhalb der Sensorelemente 1, 2, 3, 4 eine Optikplatte 9 dargestellt, in welcher optische Elemente 6, 7, 8 oberhalb der Sensorelemente 1, 2, 3, 4 angebracht sind. Die optischen Elemente 6, 7, 8 bündeln das einfallende Licht und leiten das Licht auf die den optischen Elementen 6, 7, 8 zugeordneten Sensorelementen 1, 2, 3, 4. Die Optiken sind so ausgestaltet, dass das Licht aus der gewünschten Richtung zu dem zugeordneten Sensorelement geleitet wird. Streulicht oder anderes störendes Licht wird durch die besondere Art der Gestaltung der optischen Elemente ausgeblendet.

Beispiele für die besondere Art der Ausgestaltung von optischen Elementen sind in den Fig. 3 bis 5 erkennbar. Es sind hier insbesondere die optischen Elemente für die Sensorelemente 1, 2 zum Ermitteln des Flächenwinkels der Lichtquelle und des Sensorelements 3 zum Ermitteln des Höhenwinkels der Lichtquelle und zum Messen des Lichts in der Umgebung dargestellt. Die beiden Sensorelemente 1, 2 zum Ermitteln des Flächenwinkels der Lichtquelle weisen dabei ein gemeinsames optisches Element 8 auf, welches einen quaderförmigen unteren und einen trichterförmigen oberen Abschnitt 8b hat. Der trichterförmige obere Abschnitt 8b weist zwei gegenüberliegende plane Flächen 81 auf und zwei diese planen Seitenflächen verbindenden facettiert gebogenen Seitenflächen 82 und 83 auf. Das optische Element 8 wird durch eine plane obere Begrenzungsfläche 84 abgeschlossen.

Das optische Element 7, welches dem Sensorelement 3 zugeordnet ist, das sowohl zum Messen des Lichts in der Umgebung als auch zum Ermitteln des Höhenwinkels ausgestaltet ist, weist einen unteren Abschnitt auf, an den sich ein scheibenartig geformter Abschnitt anschließt. Die obere Begrenzungsfläche des scheibenartig ausgebildeten Abschnitts ist plan ausgebildet.

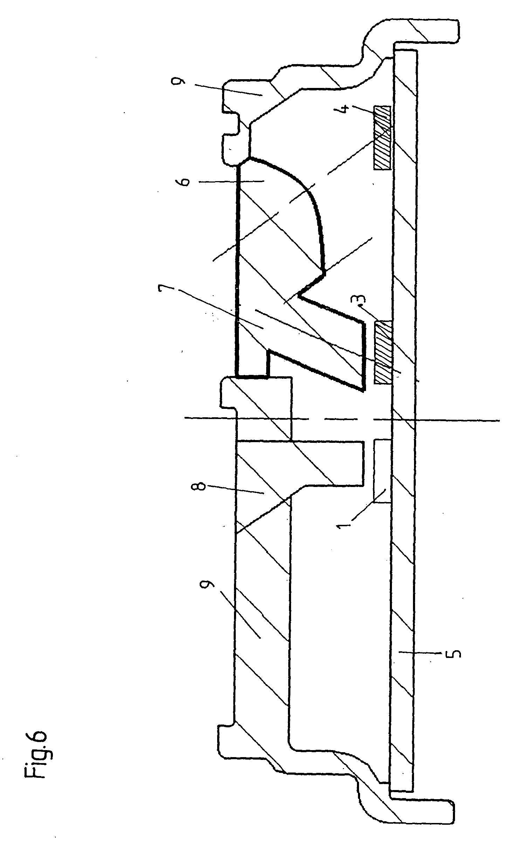

Bei dem in der Fig. 6 dargestellten Schnitt durch ein weiteres Ausführungsbeispiel einer erfindungsgemäßen Vorrichtung sind der Optikhalter 9 und die Platine 5 so miteinander verbunden, dass sie ein Gehäuse bilden, welches die Sensorelemente 1, 2, 3, 4 einschließt. Der Optikhalter 9 ist dazu seitlich heruntergezogen und umgreift die Platine 5. Die Vorrichtung gemäß Fig. 6 weist ebenfalls vier Sensorelemente 1, 2, 3, 4 auf, von denen ein Sensorelement 3 zum Ermitteln des Flächenwinkels der Lichtquelle, das Sensorelement zum Ermitteln des Höhenwinkels und zum Messen des Lichts der Umgebung und das Sensorelement 4 zum Messen des Lichts in der Fahrtrichtung des Kraftfahrzeugs dargestellt ist. Die beiden letztgenannten Sensorelemente 3, 4, nämlich das Sensorelement zum kombinierten Messen des Lichts in der Umgebung und zum Ermitteln des Höhenwinkels der Lichtquelle und das Sensorelement 4 zum Messen des Lichts in der Fahrtrichtung des Kraftfahrzeugs weisen optische Elemente 6, 7 auf, die einstückig miteinander verbunden sind. Die Strahlengänge sind jedoch so ausgestaltet, dass die einstückig miteinander verbundenen optischen Elemente 6, 7 unabhängig voneinander Licht zu den zugeordneten Sensorelementen 3, 4 leiten.

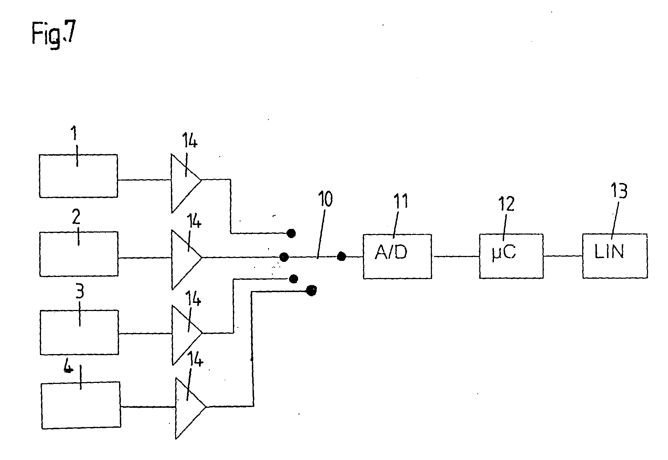

Anhand des Blockschaltbilds in Fig. 7 ist eine mögliche Realisierung für eine erfindungsgemäße Vorrichtung schematisch dargestellt. Den Sensorelementen 1, 2, 3, 4 sind Verstärker 14 zugeordnet, welche das von den vorzugsweise als Fotodioden ausgebildeten Sensorelementen 1, 2, 3, 4 gelieferte elektrische Signal auf ein gewünschtes Niveau verstärken. Die Ausgänge der Verstärker 14 sind zu einem Wechselschalter 10 geleitet, der nacheinander die Ausgänge der Verstärker 14 mit einem Analog-Digitalwandler 11 verbindet. Der Analog-Digitalwandler wandelt das aktuell am Ausgang des Schalters 10 anliegende elektrische Signal in ein digitales Muster um, welches von dem an dem Analog-Digitalwandler 11 angeschlossene Mikroprozessor 12 verarbeitet werden kann. Der Mikroprozessor 12 ist mit einem Ausgang an ein LIN-Netzwerk 13 angeschlossen, aus welchem die von der erfindungsgemäßen Vorrichtung gelieferten Messsignale abrufbar sind. Die Ausgänge der Verstärker 14 werden durch den Schalter 10 so abgetastet, dass die von den Sensorelementen gemessenen Werte in einer ausreichenden Auflösung in dem LIN-Netzwerk zur Weiteren Verwendung zur Verfügung stehen, um beispielsweise eine Klimaanlage oder einen Scheibenwischer zu steuern.

In dem Mikroprozessor erfolgt darüber hinaus auch die Anpassung des von dem Sensorelement 3 zur Verfügung gestellten Sensorsignal. Das Sensorsignal, welches das Sensorelemente 3 liefert, kann, wie bereits ausgeführt, nämlich der Messwert des Lichts in der Umgebung oder aber der Messwert des Höhenwinkels der Lichtquelle sein. Der Mikroprozessor ist dabei so programmiert, dass er als Mittel zum Umschalten des Messbereichs des Sensorelementes 3 dient, so dass das Sensorelement 3 in der gewünschten Weise für die Messung des Lichts in der Umgebung als auch zum Ermitteln des Höhenwinkels der Sonne geeignet ist.

## Patentansprüche

1. Vorrichtung für ein Kraftfahrzeug zum Messen von Licht mit mehreren Sensorelementen (1, 2, 3, 4), wobei ein Sensorelement (4) zum Messen des Lichts in der Fahrtrichtung des Kraftfahrzeugs und ein Sensorelement (3) zum Messen des Lichts in der Umgebung des Kraftfahrzeugs geeignet ist,
**dadurch gekennzeichnet,**
**dass** ein oder zwei Sensorelemente (1, 2) zum Ermitteln des Flächenwinkels einer Lichtquelle und ein Sensorelement (3) zum Ermitteln des Höhenwinkels der Lichtquelle geeignet ist.

2. Vorrichtung nach Anspruch 1, **dadurch gekennzeichnet, dass** eines der Sensorelemente (3) sowohl zum Messen des Lichts in der Umgebung als auch zum Ermitteln des Höhenwinkels der Lichtquelle geeignet ist.

3. Vorrichtung nach Anspruch 1, **dadurch gekennzeichnet, dass** eines der Sensorelemente sowohl zum Messen des Lichts in der Umgebung als auch zum Ermitteln des Flächenwinkels geeignet ist.

4. Vorrichtung nach Anspruch 1, 2 oder 3, **dadurch gekennzeichnet, dass** eines der Sensorelemente sowohl zum Messen des Lichts in der Fahrtrichtung als auch zum Ermitteln des Höhenwinkels oder des Flächenwinkels geeignet ist.

5. Vorrichtung nach einem der vorhergehenden Ansprüche, **dadurch gekennzeichnet, dass** die Vorrichtung ein Mittel zum Umschalten (11, 12) des Messbereichs des Sensorelements aufweist, das für die Messung bzw. Ermittlung verschiedener Größen geeignet ist.

6. Vorrichtung nach einem der vorhergehenden Ansprüche, **dadurch gekennzeichnet, dass** die Sensorelemente (1, 2, 3, 4) zumindest teilweise Fotodioden sind.

7. Vorrichtung nach einem der vorhergehenden Ansprüche, **dadurch gekennzeichnet, dass** die Vorrichtung optische Elemente (7, 8, 9) aufweist, die den Sensorelementen (1, 2, 3, 4) zugeordnet sind.

8. Kraftfahrzeug **dadurch gekennzeichnet, dass** das Kraftfahrzeug eine Vorrichtung nach einem der Ansprüche 1 bis 8 aufweist.

9. Kraftfahrzeug nach dem vorhergehenden Anspruch, **dadurch gekennzeichnet, dass** die Vorrichtung vorzugsweise im Bereich des oberen Endes in der Mitte einer Fahrzeugscheibe des Kraftfahrzeugs angebracht ist.
